# EUROPEAN PATENT APPLICATION

(11) **EP 4 417 917 A1**
(43) Date of publication of application: **21.08.2024**
(21) Application number: 24157600.8
(22) Date of filing: 14.02.2024
(51) Int. Cl.: F26B 5/08, B29B 13/06, F26B 11/02, F26B 11/04, F26B 11/16, F26B 25/08, F26B 25/04

(54) **MACHINE AND PROCESS FOR DRYING PLASTIC WASTE**

(30) Priority: 16.02.2023 BE 202305112
(71) Applicant: Vanheede Polymers & Compounds Srl, 7711 Mouscron (BE)
(72) Inventor: WECXSTEEN, Olivier, 7040 Quévy (BE)
(74) Representative: Hostens, Veerle

(57) **Abstract**

Machine (1) and process for continuously drying plastic waste, which is pretreated and prewashed, by separating it into plastics materials and liquid, the machine (1) comprising a drum (2) and an endless screw (3) that is mounted concentrically and so as to be rotatable, at a first rotational speed in the drum (2), which is rotatable at a second rotational speed, and the drum (2) being provided:
- with a loading orifice (9), in order to feed the waste via a first end (10) of the drum (2);
- with a peripheral casing (11) equipped with apertures (16), in order to discharge the liquid; and
- with unloading orifices (12) at another end (13) of the drum (2), in order to discharge the plastics materials;
wherein the second rotational speed remains lower than the first rotational speed, such that no heating is necessary and the creation of fines is limited, in order to make it easier to sort the plastics.

## Description

The present invention relates to a machine and a process for continuously drying plastic waste, the waste being pretreated and prewashed, by separating the waste into plastics materials and liquid, the machine comprising a drum and an endless screw that is mounted concentrically in the drum, the endless screw being equipped with a hub and flighting, the flighting having an outer diameter that is adapted to the corresponding diameter of the drum, and the drum being provided:
- with a loading orifice at a first end of the drum, in order to feed the waste in a direction that follows the direction in which the hub mainly extends;
- with a peripheral casing, equipped with apertures, in order to discharge the liquid; and
- with an unloading orifice at another end of the drum, in order to discharge the plastics materials.

Such a machine and such a process are provided in order to transform plastic waste, and more particularly polyolefins, into reusable pellets.

The waste is in particular plastic packaging, such as bottles, for example, containing food such as ketchup, oil, etc. as well as packaging containing, for example, cleaning products such as detergents, etc. This packaging may be, for example, made from polypropylene, polyethylene or polystyrene. This waste is generally collected together in order to be recycled, but it must be separated out in order to allow each product to be recycled separately.

This waste may be pretreated in order to obtain pieces that can be washed in order to remove contaminating residues. The water with which these pieces are washed, and, if necessary, the contaminating residues, must be removed in order to sort these pieces correctly.

The existing machines intended for or used for this purpose, such as the machines described in KR 2019 0029930 A, KR 2013 0011742 A, CN 208 567 316 U or CN 102 032 765 A, break down the materials, which creates fine particles that are lost during washing. The resulting fragments also make sorting difficult. In order to be able to properly sort the fragments, it is essential for the size to be at least 20 mm and ideally approximately 50 mm. Since, in the existing processes, the pieces become too fragmented, a lot of recyclable material is lost.

The aim of the invention is to provide a machine that makes it possible to optimize this process so as to be able to correctly wash and dry larger pieces and to avoid the production of fines in order to make it easier to sort them and to obtain a better recycling yield.

According to the invention, this aim is achieved by a machine for drying plastic waste, the waste being pretreated and prewashed, by separating the waste into plastics materials and liquid. The machine comprises a drum and an endless screw that is mounted concentrically in the drum. In order to convey the waste, the endless screw is equipped with a hub and flighting with an outer diameter that is adapted to the corresponding diameter of the drum. The drum is provided:
- with a loading orifice at a first end of the drum, in order to feed the waste in a direction that follows the direction in which the hub mainly extends;
- with a peripheral casing, equipped with apertures, in order to discharge the liquid; and
- with unloading orifices at another end of the drum, in order to discharge the plastics materials.

The endless screw is rotatable at a first rotational speed and the drum is mounted so as to be rotatable, at a second rotational speed, such that the second rotational speed remains lower than the first rotational speed, which limits the creation of fines, in order to make it easier to sort the plastics.

Such a machine makes it possible to place the plastics materials in a reference frame subject to significant accelerations allowing dewatering and drying without being subject to mechanical stresses that cause the creation of fine particles. To this end, the endless screw rotates in the same direction as the drum. This makes it possible to avoid excessive differences in speed that would risk excessive fragmentation of the plastic. Preferably, the difference in speed between the endless screw and the drum remains between 0 and 100 rpm.

With such a machine, materials can thus be continuously dewatered by centrifugation in order to remove water and, if necessary, contaminating residues. By dewatering the waste, it is dried further. The size of the pieces may be preserved, which limits the creation of fines. By drying the waste in this manner, there is no need to add heat energy for the drying process. The waste may thus be dried without heating, which means that less energy is needed for drying. An active supply of air for drying may also be avoided.

With a rotating drum, it is not possible to feed the waste in a continuous process via an aperture in the peripheral casing, as is often the case in the prior art. By feeding the waste via the front face at the first end of the drum, rather than via an aperture in the casing, the waste is also introduced less harshly, which considerably reduces fragmentation. This is because, if the waste is thrown mainly perpendicularly to the hub, which rotates at high speed, instead of being introduced almost parallel thereto, it is more severely thrown about by the centrifugal force. The loading orifice in the drum is more preferably adjacent to the hub, in order to feed the waste directly along the hub. In this manner, fragmentation is further reduced. However, even if this aperture is located at an intermediate distance from the hub, it is already possible to obtain a significant improvement over said prior art.

Preferably, the endless screw and the drum are driven by differential drive means.

The apertures in the casing, which are composed of one or more grids, make it possible to discharge the liquid.

In a machine according to the invention, preferably, in order to dry plastic waste, the apertures in the casing mainly extend in the longitudinal direction of the drum. Since the drum is rotatable about an axis of rotation, the longitudinal direction of the drum extends parallel to this axis of rotation. The dimension of such an aperture viewed in this longitudinal direction is thus longer than any dimension of this aperture viewed transversely to this longitudinal direction.

This lowers the risk of the pieces becoming stuck in these apertures, and prevents the grids from becoming clogged. In order to further prevent the pieces from becoming stuck in the apertures, the dimension of such an aperture viewed in the longitudinal direction of the drum (parallel to the axis of rotation) is preferably longer than a third of the casing in this direction, more preferably longer than half of the casing in this direction. Preferably, such an aperture extends over virtually the entirety of the length of the casing, viewed in this direction.

For such apertures that extend mainly in the longitudinal direction of the drum, their tangential spacing (in a direction that is transverse to the axis of rotation) preferably does not exceed 5 mm, even more preferably 3 mm. Even more preferably, this dimension does not exceed 2.5 mm.

For other applications, round apertures, for example, may be suitable.

In one specific embodiment according to the invention, the machine comprises a feed chamber connected to the loading orifice in order to feed the waste via this feed chamber.

The machine then preferably comprises a feed screw that is mounted so as to be rotatable in the feed chamber in order to feed the waste via this feed chamber. Such a screw also feeds the drum with large pieces of waste.

The feed screw and the endless screw preferably rotate about the same axis, although they are preferably provided in the form of separate screws.

Such a feed chamber is preferably provided with a loading orifice in order to feed the waste onto the feed screw radially.

Such a feed screw may have flighting, the outer diameter of which is equal to the outer diameter of the flighting of the endless screw. Preferably, however, the feed screw has flighting, the outer diameter of which is smaller than the outer diameter of the flighting of the endless screw. Such a smaller feed screw, which rotates in a fixed feed chamber, makes it possible to ensure that the waste is thrown about to a lesser extent by the centrifugal forces when it is introduced into the drum. Reducing the diameter of the feed screw compared to the diameter of the endless screw lowers the cost of the application. It is possible to reduce the size of the corresponding feed chamber and to reduce the cost of the connection to the drum, both in terms of production and in terms of maintenance.

The feed chamber is fixedly mounted, the drum being rotatable with respect to this feed chamber. To this end, the feed chamber preferably penetrates into the drum in order to allow the two to be connected. Such a feed screw with a smaller diameter than the diameter of the endless screw makes it easier for the endless screw to be connected closer to the inner wall of the drum.

The feed chamber preferably has a cylindrical portion that connects to the drum and has a smaller outer diameter than the casing of the drum. In order to connect such a feed chamber with a smaller outer diameter than the diameter of the casing of the drum, the casing is preferably extended towards the feed chamber by means of a connecting piece, which forms part of the drum. Such a connecting piece preferably has a solid outer wall.

In order to prevent the plastics materials from fragmenting while the waste is being dried, a machine according to the present invention comprises, in such embodiments, the fewest possible bumps with which the waste may come into contact and which may cause fragmentation.

The hub of the endless screw is preferably mainly cylindrical, and preferably has the same diameter over virtually the entirety of its length. This hub preferably comprises an outer surface with no apertures. This hub may be solid, but it may also be hollow, preferably provided that its cavity is then not in contact with the space in the drum in which the waste is introduced.

The flighting is preferably provided with a solid screw blade.

Other than the endless screw, the drum is preferably practically free of any other components.

According to the invention, the aim is also achieved by a process for continuously drying plastic waste, the waste being pretreated and prewashed. In this process, the waste is separated into plastics materials and liquid by using a machine according to the invention as described above.

This waste is preferably pretreated in order to obtain 0 to 200 mm pieces, preferably 50 to 80 mm pieces, before it is dried. This may be accomplished by crushing it.

The aim of the present invention is also achieved by providing a process for transforming plastic waste into reusable pellets, comprising pretreating and prewashing the waste and drying the pretreated and prewashed waste, using a process according to the invention as described above.

Preferably, after the waste has been dried using such a process, the plastics materials obtained are sorted. To this end, these plastics materials obtained may be sorted by colour and/or by type of plastic, specifically using density-based and/or optical and/or near-infrared sorting, etc.

A machine according to the invention may also be used for many other things. For example, a machine according to the invention may also be used in the process of recycling polyethylene terephthalate or for recycling films, or in the food industry for dewatering vegetables.

The present invention will now be explained in greater detail by describing machines and processes that are preferred according to the invention. The sole aim of this description is to provide an illustrative example of the invention and to reveal other advantages and details of the machines and processes according to the invention, and it should in no way be interpreted as limiting the field of use of the invention or the patent rights applied for in the claims.

In this detailed description, the reference numerals refer to the appended drawings, in which:
Figure 1 illustrates, schematically, a cross section through a machine according to the invention;
Figure 2 shows, schematically, a partial section through a machine according to the invention, with the drum visible.

The machines (1) shown in the figures are particularly suitable for transforming plastic waste into reusable pellets, but could alternatively be used for dewatering salad, for example.

In order to transform plastic waste, this waste is first of all pretreated, for example by crushing it into medium-sized pieces, with a dimension of 0 to 200 mm, preferably 50 to 80 mm.

This pretreated waste is then washed. This pretreated and washed waste is fed via the loading orifice (15) to a feed chamber (14), which is fixed in the machine (1). A feed screw (6) in this feed chamber (14) conveys this waste. In order to move the waste along, this feed screw (6) has a diameter (Dₐ) that corresponds to the diameter (D_{c}) of the peripheral casing of the feed chamber (14). These diameters (Dₐ, D_{c}) are as closely matched as possible, such that the space between the feed screw (6) and the casing of the feed chamber (14) is as small as possible. The feed screw (6) moves the waste along in order to feed it via a loading orifice (9), at the front face of the drum (2), at a first end (10) of the drum (2), into this drum (2). The loading orifice (9) for loading the drum (2) opens into the drum (2). The feed chamber (14) penetrates into the drum (2).

An endless screw (3) is mounted concentrically and so as to be able to rotate in the drum (2). The flighting (5) of the endless screw (3) has an outer diameter (Dₛ) that is adapted to the inner diameter (Dₜ) of the casing (11) of the drum (2). These diameters (Dₛ, Dₜ) are as closely matched as possible, such that the waste is moved along by this endless screw (3) without being brought between this endless screw (3) and the peripheral casing (11).

The endless screw (3) and the feed screw (6) are rotated about the same axis (R). The feed screw (6) has flighting (8), the outer diameter (Dₐ) of which is smaller than the outer diameter (Dₛ) of the flighting (5) of the endless screw (3). In the embodiment illustrated, the endless screw (3) has a hub (4) that is different from the hub (7) of the feed screw (6). In other embodiments, these hubs (4, 7) may form part of the same hub, which may optionally have different diameters.

In the embodiments illustrated, the hubs (4, 7) are solid and equipped with a solid screw blade, which forms the flighting (5, 8).

In order to connect the feed chamber (14) with a smaller diameter (D_{c}) than the diameter (Dₜ) of the casing (11) of the drum (2), the casing (11) is extended towards the feed chamber (14) by means of a connecting piece (23) that forms part of the drum (2). This connecting piece (23) has a solid outer wall.

The waste is fed, via the first loading orifice (15) in the feed chamber (14), radially to the feed screw (6) and, via the second loading orifice (9) in the drum (2), along the hub (4) of the endless screw (3), adjacent to the hub (4).

The endless screw (3) can be rotated in the drum (2) at a first rotational speed by the drive (22), and the drum (2) is mounted so as to be able to rotate about the same axis (R), at a second rotational speed, by the drive (21). The endless screw (3) and the drum (2) may also be driven by the same drive means, by using a differential.

The endless screw (3) is rotated in the same direction as the drum (2). The second rotational speed always remains lower than the first rotational speed. The difference in speed between the endless screw (3) and the drum (2) remains between 0 and 100 rpm. The endless screw (3) is rotated at high speed, which causes the water to swirl, along with any contamination, through the apertures (16) in the peripheral casing (11) of the drum (2). These apertures (16) form one or more grids for discharging the liquid.

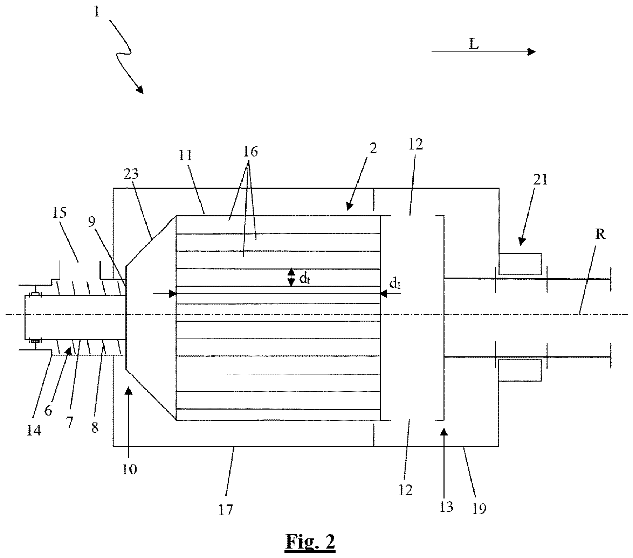

These apertures (16) in the casing (11) may take several forms. In one simple embodiment, they may be round apertures (16), the diameter of which may be between 1 and 5 mm. Preferably, these apertures (16) have an elongate form. They thus mainly extend in the longitudinal direction (L) of the drum (2) and preferably have a tangential spacing (dt), which does not exceed 5 mm and preferably does not exceed 3 mm. They may mainly extend parallel to the longitudinal direction (L), as illustrated in Figure 2, or they may instead extend helically. Preferably, the dimension (di) of such an aperture (16) in the longitudinal direction (L) extends mainly over the entirety of the casing (11), as illustrated in Figure 2.

The further away the loading orifice (9) is, the more the liquid is removed via these apertures (16). This liquid is collected in a tank (17) and discharged from this tank (17) via an unloading orifice (18).

The pieces of plastic dried in this way are discharged at another end (13) of the drum (2) via an unloading orifice (12) in the drum (2). These pieces of plastic are collected in a tank (19) and discharged from this tank (19) via an unloading orifice (20) in the tank (19).

These pieces of plastic are then sorted by colour and/or by type of plastic, using density-based, optical or near-infrared sorting, etc.

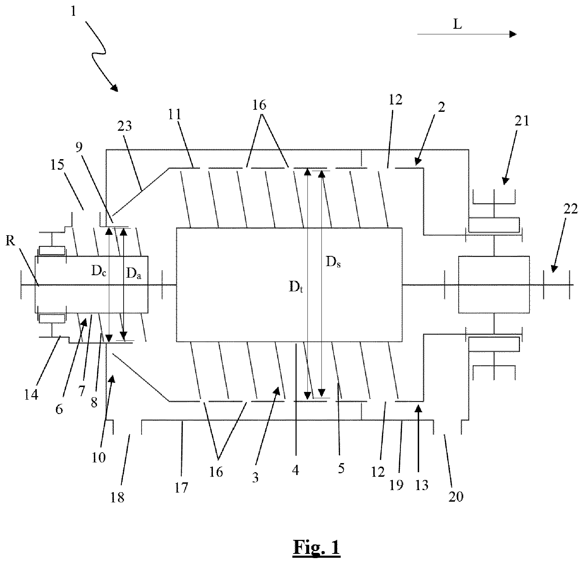

In the machine (1) in Figure 1, the drum (2) extends mainly horizontally. In other embodiments, this drum (2) may equally extend in other directions and thus extend mainly vertically, for example.

## Claims

1. Machine (1) for continuously drying plastic waste, the waste being pretreated and prewashed, by separating the waste into plastics materials and liquid, the machine (1) comprising a drum (2) and an endless screw (3) that is mounted concentrically in the drum (2), the endless screw (3) being equipped with a hub (4) and flighting (5), the flighting (5) having an outer diameter (Dₛ) that is adapted to the corresponding diameter (Dₜ) of the drum (2), and the drum (2) being provided:
- with a loading orifice (9) at a first end (10) of the drum (2), in order to feed the waste in a direction that follows the direction (L) in which the hub (4) mainly extends;
- with a peripheral casing (11), equipped with apertures (16), in order to discharge the liquid; and
- with an unloading orifice (12) at another end (13) of the drum (2), in order to discharge the plastics materials;
**characterized in that** the endless screw (3) is rotatable at a first rotational speed and the drum (2) is mounted so as to be rotatable, at a second rotational speed, such that the second rotational speed remains lower than the first rotational speed, which limits the creation of fines, in order to make it easier to sort the plastics.

2. Machine (1) according to Claim 1, **characterized in that** the loading orifice (9) is adjacent to the hub (4).

3. Machine (1) according to either one of the preceding claims, **characterized in that** the endless screw (3) and the drum (2) are driven by differential drive means (21, 22).

4. Machine (1) according to any one of the preceding claims, **characterized in that** the apertures (16) in the casing (11) mainly extend in the longitudinal direction (L) of the drum (2).

5. Machine (1) according to Claim 4, **characterized in that** the apertures (16) have a tangential spacing (dt), which does not exceed 5 mm.

6. Machine (1) according to any one of the preceding claims, **characterized in that** the machine (1) comprises a feed chamber (14) connected to the loading orifice (9) in order to feed the waste via this feed chamber (14).

7. Machine (1) according to Claim 6, **characterized in that** the machine (1) comprises a feed screw (6) that is mounted so as to be rotatable in the feed chamber (14) in order to feed the waste via this feed chamber (14).

8. Machine (1) according to Claim 7, **characterized in that** the feed chamber (14) is provided with a loading orifice (15) in order to feed the waste radially onto the feed screw (6).

9. Machine (1) according to Claim 7 or 8, **characterized in that** the feed screw (6) has flighting (8), the outer diameter of which is smaller than the outer diameter of the flighting (5) of the endless screw (3).

10. Process for continuously drying plastic waste, the waste being pretreated and prewashed, by separating the waste into plastics materials and liquid, **characterized in that** the waste is separated into the plastics materials and the liquid by using a machine (1) according to any one of the preceding claims.

11. Process according to Claim 10, **characterized in that**, when using the machine (1), the endless screw (3) is rotated in the same direction as the drum (2).

12. Process according to Claim 10 or 11, **characterized in that** the difference in speed between the endless screw (3) and the drum (2) remains between 0 and 100 rpm.

13. Process according to one of Claims 10 to 12, **characterized in that** the waste is pretreated in order to obtain 0 to 200 mm pieces before it is dried.

14. Process for transforming plastic waste into reusable pellets, comprising pretreating and prewashing the waste and drying the pretreated and prewashed waste, **characterized in that** the waste is dried using a process according to one of Claims 10 to 13.

15. Process according to Claim 14, **characterized in that** the plastics materials obtained are sorted.
